# EUROPÄISCHE PATENTSCHRIFT

(11) **EP 0 897 898 B1**
(45) Veröffentlichungstag und Bekanntmachung des Hinweises auf die Patenterteilung: **28.04.2004**
(21) Anmeldenummer: 98114529.5
(22) Anmeldetag: 03.08.1998
(51) Int. Cl.: C03C 17/25, C23C 18/12, C04B 41/85

(54) **Verfahren zur Abscheidung optischer Schichten**
Method for the deposition of optical layers
Méthode de déposition de couches optiques

(30) Priorität: 16.08.1997 DE 19735493; 25.06.1998 DE 19828231
(43) Veröffentlichungstag der Anmeldung: 24.02.1999
(73) Patentinhaber: MERCK PATENT GmbH, 64293 Darmstadt (DE)
(72) Erfinder: Schulz, Jochen, 97209 Veitshöchheim (DE); Büttgenbach, Lutz, 64372 Ober-Ramstadt (DE); Dislich, Helmut, 55257 Budenheim (DE); König, Friedrich, 64354 Reinheim (DE); Glaubitt, Walter, 97209 Veitshöchheim (DE)

(56) Entgegenhaltungen:
- EP-A- 0 246 757
- EP-A- 0 356 229
- EP-A- 0 563 920
- EP-A- 0 597 490
- US-A- 4 271 210
- PATENT ABSTRACTS OF JAPAN vol. 012, no. 263 (C-514), 22. Juli 1988 & JP 63 048358 A (NIPPON SHOKUBAI KAGAKU KOGYO CO LTD), 1. März 1988
- FLOCH H G ET AL: "COLLOIDAL SOL-GEL OPTICAL COATINGS" AMERICAN CERAMIC SOCIETY BULLETIN, Bd. 69, Nr. 7, 1. Juli 1990, Seiten 1141-1143, XP000163087
- PATENT ABSTRACTS OF JAPAN vol. 009, no. 203 (P-381), 21. August 1985 & JP 60 067901 A (KOGYO GIJUTSUIN;OTHERS: 0J), 18. April 1985
- D. R. UHLMANN ET AL: "Sol Gel Synthesis of Optical Thin Films and Coatings" SOL-GEL OPTICS, SOL-GEL OPTICS, SAN DIEGO, CA, USA, 11-13 JULY 1990, Bd. 1328, Seiten 270-295, XP000444802 ISSN 0277-786X, Proceedings of the SPIE - The International Society for Optical Engineering, 1990, USA
- DISLICH H: "SOL-GEL DERIVED DIP COATINGS" VIDE, LES COUCHES MINCES, Bd. 40, Nr. 227, 1. Mai 1985, Seiten 261-268, XP000363633

## Beschreibung

Die Erfindung betrifft die Abscheidung optischer Schichten von Metalloxiden auf Gläser, Keramiken oder Metalle.

Für die Herstellung optischer Schichten aus flüssigen Vorstufen ist es aus Umweltgründen sowie aus sicherheitstechnischen Aspekten erstrebenswert, Systeme einzusetzen, die entflammbare und/oder giftige Lösemittel vermeiden. Bisher eingesetzte Verfahren gehen von metallorganischen Verbindungen aus, die auf dem zu beschichtenden Substrat hydrolysiert und durch Temperaturerhöhung in einen harten und abriebfesten Film eines Metalloxids polykondensiert werden. Bisher eingesetzte Verfahren gehen von Alkoxiden oder Acetylacetonaten aus, die mit Wasser hydrolysiert werden. Die so entstehenden Beschichtungslösungen enthalten daher Alkohole oder andere organische Lösemittel. Häufig werden zur Verbesserung der Verlaufseigenschaften und der Viskosität zusätzlich organische Lösemittel zugesetzt.

EP 0 514 973 beschreibt ein Sol-Gelverfahren zur Abscheidung von Antireflexschichten auf Glas, die eine hohe Kratzfestigkeit und eine geringe Empfindlichkeit gegenüber Feuchtigkeit besitzen. Alkoholische Lösungen von Alkoxiden der Elemente Silicium, Aluminium oder Titan werden zusammen mit Wasser unter Zusatz geringer Mengen Salzsäure auf das Substrat gebracht und für 20 min mit einer Wasserdampfatmosphäre in Kontakt gebracht. Während dieser Zeit wird das Substrat von 23 °C auf 55 °C erwärmt und die erhaltene Schicht für 30 min bei 150 °C getrocknet. Die zugesetzte Säure katalysiert die Hydrolyse des Alkoxides und die Erwärmung während der Gelbildung führt zu einer besseren Vernetzung des Gels.

EP 0 597 490 beschreibt ein Verfahren zu Bildung eines Siliciumdioxidfilms auf einem Glassubstrat als Antireflexschicht, indem zwei metallorganische Siliciumverbindungen mit unterschiedlichem Molekulargewicht aus der Gruppe Siliciumalkylate und Siliciumacetylacetonate, die in Isopropylalkohol oder 1-Butanol gelöst sind, auf das Glassubstrat aufgebracht und bei einer relativen Luftfeuchtigkeit von 40 bis 90 % hydrolysiert werden.

Durch Erwärmen auf eine Temperatur von 100 °C wird der erhaltene Solfilm in einen Gelfilm umgewandelt und anschließend das beschichtete Substrat auf 550 °C erhitzt.

Aus der JP 63-048 358 ist ein Verfahren zur Abscheidung von Zirkoniumoxidschichten auf einem Substrat bekannt, wobei das wäßrige Sol durch Zugabe von Alkohol entwässert wird. Die erhaltene Mischung wird auf das Substrat aufgebracht, bei 30-70 °C und einer relativen Luftfeuchtigkeit von 70-95% vorgetrocknet und anschließend bei Temperaturen von 100-500 °C calciniert.

EP 0 563 920 beansprucht eine antistatische Beschichtung aus einem elektrisch leitfähigen Metalloxid und aus Siliciumdioxid, erhalten durch Hydrolyse von Lithiumsilikat oder Alkylsilikaten.

G. Floch et al. beschreiben in Ceramic Bulletin, 1990, 1141-1143 die Herstellung von antireflektiven Metalloxidbeschichtungen aus Solen in alkoholischer Lösung und bei Zimmertemperatur, die gegenüber der Bestrahlung mit Lasern stabil sind.

In der EP 0 356 229 wird eine Beschichtung für Kathodenstrahlröhren beansprucht, die durch Auftragung eines Lithium-stabilisierten Siliziumdioxidsols auf ein erwärmtes Glassubstrat und anschließende Erwärmung der erhaltenen Oberflächen realisiert wird.

EP 0 246 757 beschreibt die Beschichtung von Substraten an der Grenzfläche zu einem Sol, vorzugsweise mit Siliciumdioxid. Das Sol enthält oberflächenaktive Substanzen, die die Benetzung der Substratoberfläche während der Beschichtung ermöglichen.

Aus US 4,271,210 ist ein Verfahren zur Herstellung einer porösen Aluminiumoxidschicht auf einem Glassubstrat bekannt, wobei der Brechungsindex der Aluminiumoxidschicht wesentlich kleiner als derjenige des Glassubstrats ist.

JP 60-067 901 beansprucht ein CVD-Verfahren, bei dem durch Einstellung der Prozeßparameter der Brechungsindex der erhaltenen amorphen Siliciumcarbidschichten variiert werden kann.

D.R. Uhlmann et al. geben in Sol-Gel Optics, 1990, Bd. 1328, 270-294 einen Überblick über die Vorteile von Sol-Gel-Verfahren bei der Herstellung optischer Schichten in unterschiedlichen Anwendungsbereichen wie z.B. bei Entspiegelungen oder elektrooptischen Materialien.

H. Dislich beschreibt in Les couches minces, Bd. 40, 227, 261-268, die Vor- und Nachteile der Tauchbeschichtung zur Aufbringung von Metalloxidschichten auf Glassubstraten.

Diese Verfahren haben den Nachteil, daß wegen der Verwendung von Lösungsmitteln und metallorganischen Verbindungen bezüglich Umweltschutz und Explosionsschutz besondere Vorkehrungen getroffen werden müssen, die die Verfahren komplizieren und verteuern.

Aufgabe der Erfindung ist es, ein Verfahren zur Abscheidung von Metalloxidschichten mit optischer Qualität auf Substraten bereitzustellen, das ohne Lösungsmittel und metallorganische Verbindungen ausgeführt werden kann.

Diese Aufgabe wird gemäß der Erfindung gelöst durch ein Verfahren zur Abscheidung optischer Schichten von Metalloxiden ausgewählt aus der Gruppe bestehend aus Siliciumdioxid, Aluminiumoxid, Titandioxid, Zirkonoxid, Hafniumoxid, Nioboxid, Tantaloxid und Oxiden von Actiniden oder Lanthaniden auf Gläser, Keramiken oder Metalle, indem
- das zu beschichtende Substrat einer reinigenden Vorbehandlung unterzogen wird,
- das wäßrige Sol oder Solgemisch ohne Zusatz von organischen Lösungsmitteln auf das zu beschichtende Substrat aufgebracht wird und
- das beschichtete Substrat bei Temperaturen von 100 bis 550 °C getempert wird.

Als Ausgangsmaterial für die Beschichtung der genannten Substrate werden wäßrige Metalloxidsole eingesetzt, die nach dem in US 5 378 400 beschriebenen Elektrolyseverfahren aus wäßrigen Metallsalzlösungen bei 0 °C bis 15 °C erhalten werden. Diese Sole enthalten 0,3 bis 15% Metalloxid. Sie sind hochtransparent und enthalten keine Stabilisatoren. Nach diesem Verfahren sind Sole aus Aluminiumoxid, Titandioxid, Zirkonoxid, Hafniumoxid, Nioboxid, Tantaloxid bzw. Oxiden von Actiniden oder Lanthaniden herstellbar.

Trotz des unterschiedlichen pH-Wertes der Einzelsole lassen sie sich miteinander mischen und in der unten beschriebenen Weise auf die genannten Substrate applizieren. Durch Mischen von Solen mit unterschiedlichen Brechzahlen lassen sich optische Schichten mit Brechzahlen zwischen 1,45 und 2,2 herstellen.

Weiterhin kommen als Ausgangsmaterial für die Beschichtung wäßrige Metalloxidsole in Frage, die durch Hydrolyse von metallorganischen Verbindungen, speziell Alkoxiden, durch Ionenaustausch aus Metallsalzlösungen, durch Mikroemulsion aus Alkoxiden oder Metallsalzlösungen oder durch Dialyse bzw. Elektrodialyse nach bekannten Verfahren hergestellt werden. Die Partikelgröße der Sole liegt im Bereich von 1 bis 25 nm.

Ein Mikroemulsionsverfahren wird von D. Burgard, R. Nass und H. Schmidt in Proceedings of the 2nd European Conference on Sol-Gel Technology, North Holland Publisher, Amsterdam 1992, Seiten 243-255 beschrieben. M. Neidle und J. Barab beschreiben in J. Amer. Soc. 39 (1917) auf Seite 71 ff die Herstellung von Solen durch Dialyse. Elektrodialyseverfahren werden durch Prajapali, M.N. und Talpade, C.R. in Indian Chem. Manuf. 12(1), Seiten 13-21 (1974) und durch Frolov, Yu. G. in D.I. Mendeleeva 107 (1979), Seiten 31ff beschrieben.

Die als Ausgangsmaterial verwendeten SiO₂-Sole mit Partikelgrößen zwischen 1 bis 50 nm können aus dem Zwischenprodukt des in US 4 775 520 beschriebenen Verfahrens hergestellt werden. Es handelt sich hierbei um SiO₂-Partikel, die durch hydrolytische Polykondensation von Tetraalkoxysilan in einem wäßrig-alkoholisch-ammoniakalischem Medium erhalten werden. Das Reaktionsgemisch wird einer Wasserdampfdestillation zur Entfernung des Lösungsmittels und des Ammoniaks unterzogen und ist dann als Ausgangsmaterial für die Beschichtung der oben genannten Substrate geeignet.

Überraschenderweise wurde gefunden, daß ein geringfügiger Zusatz von bestimmten Tensiden, beispielsweise einer Mischung aus 15-30 Gew.-% anionischen Tensiden, 5-15 Gew.-% nichtionischen Tensiden und weniger als 5 Gew.-% amphoteren Tensiden, zu porösen Schichten führt, deren Brechzahl 1,30 beträgt.

Die Sole werden mit Konzentrationen von 0,1 bis 20 Gew.-%, bevorzugt 2 bis 10 Gew.-%, bezogen auf die Beschichtungslösung eingesetzt. Die Konzentration ist abhängig von der Art des Beschichtungsverfahrens. Es sind Tauchverfahren oder Schleuderverfahren anwendbar. Außer geringen Mengen an Detergentien oder handelsüblichen Verlaufsmitteln, beispielsweise von der Firma Byk-Chemie, bzw. Komplexbildnern, zum Beispiel Ethylendiamintetraessigsäure oder Zitronensäure, sind keine weiteren Zusätze erforderlich. Die Konzentration an Detergentien und Verlaufsmitteln beträgt dabei weniger als 2 Gew.-%, die Konzentrationen an Komplexbildnern weniger als 80 Gew.-%, bezogen auf den Feststoffgehalt der Beschichtungslösung. Bezogen auf die Beschichtungslösung beträgt die Konzentration der Komplexbildner weniger als 10 Gew.-%.

Als Substratmaterialien kommen Gläser, Keramiken und Metalle in Frage. Metalle allerdings mit der Einschränkung, daß die Benetzbarkeit gegeben sein muß und keine Reaktion mit den im Sol vorhandenen Protonen auftritt.

Die Substratoberfläche muß einer Vorbehandlung unterzogen werden. Diese Vorbehandlung besteht in einer Reinigung mit Aceton, Ethanol und Wasser oder in einer alkalischen Reinigung beispielsweise mit verdünnter Natronlauge, wobei 1 n NaOH bevorzugt wird. Auch handelsübliche Reinigungsbäder, wie zum Beispiel ein RBS-Bad, sind geeignet. Der Reinigungseffekt kann durch Einsatz von Ultraschall verstärkt werden.

Bevor die Sole in die Beschichtungslösung eingearbeitet werden, können sie gereinigt werden. Ein geeignetes Verfahren ist eine Druckfiltration, wobei Filter mit einer Porengröße von 0,2 bis 2 µm verwendet werden.

Geeignete Verfahren zum Aufbringen der Beschichtungslösung auf das Substrat sind Tauchverfahren, Sprühverfahren oder Rotationsbeschichtungsverfahren (Spin coating).

Um zu technologisch relevanten Ziehgeschwindigkeiten von ca. 10 cm/min zu gelangen, muß die Solkonzentration in der Beschichtungslösung herabgesetzt werden. Bevorzugt wird eine Verdünnung mit 1 n HCl. Die Feststoffkonzentrationen beim Tauchbeschichtungsverfahren werden deshalb auf 2 Gew.-% bis 5 Gew.-% bezogen auf die Beschichtungslösung eingestellt.

Bei Anwendung des Rotationsbeschichtungsverfahrens wird mit Feststoffkonzentrationen von 2 bis 20 Gew.-% bezogen auf die Beschichtungslösung gearbeitet. Dazu wird die Beschichtungslösung gleichmäßig auf dem Substrat verteilt und anschließend, beispielsweise bei 2000 U/min, die überschüssige Lösung abgeschleudert.

Die applizierten Schichten werden im Verlauf von 90 min auf eine Temperatur von 100 bis 550 °C aufgeheizt und etwa 5 min bei Endtemperatur belassen. Im Falle der Abscheidung von Titandioxidschichten erfolgt eine Vortrocknung der applizierten Schichten bei 20 bis 70 °C über eine Zeitraum von 0,5 bis 10 Stunden.

Die getemperten Schichten besitzen optische Qualität. Die Schichtdicke kann bei Einmalbeschichtung auf 10 bis 300 nm eingestellt werden. Die Einstellung der Schichtdicke erfolgt durch Variation der Schleuder- bzw. Tauchgeschwindigkeit und durch Änderung der Viskosität und des Feststoffgehaltes der Beschichtungslösung.

Beschichtete Glasplatten lassen sich ohne Schichtabsplitterung schneiden und zeigen Abriebbeständigkeiten nach dem Taber-Abraser Test (DIN 52347) wie die durch Hydrolyse von Alkoxyden hergestellten Metalloxidschichten. Die erhaltenen Schichten sind stabil im Salzsprühnebeltest (DIN 50021 - CASS), gegenüber 1000 Stunden Auslagerung bei 85 °C und 85 % relativer Feuchte und auch stabil gegenüber UV-Bestrahlung (QUV-B-Test, DIN 53384-A). Im Vergleich zu unbeschichtetem Kalk-Natron-Glas wurde bei den beschichteten Proben im QUV-B-Test eine Schutzwirkung gegenüber Solarisationseffekten beobachtet.

Der große Vorteil des Verfahrens besteht darin, daß für die Herstellung der Schichten weder metallorganische Verbindungen noch Lösemittel erforderlich sind. Das bedeutet, daß die benötigten Beschichtungsanlagen nicht explosionsgeschützt sein müssen, was mit einer erheblichen Kosteneinsparung verbunden ist.

Die nachfolgenden Beispiele sollen die Erfindung näher erläutern, ohne sie jedoch zu beschränken.

### Beispiel 1

Flachglasplatten (Kalk-Natron-Glas) werden mit einem handelsüblichen Reinigungsbad (RBS-Bad), anschließend mit 1 n NaOH und dann mit demineralisiertem Wasser unter Ultraschall gereinigt.
Ein wäßriges ZrO₂-Sol mit einem Feststoffgehalt von 8,6 Massen-% ZrO₂ und einer Viskosität von 2,25 mm²/s (Hersteller: Merck KGaA) wird durch einen 0,2 µm Filter filtriert und ohne weitere Zusätze für die nachfolgend beschriebene Spin-Off-Beschichtung eingesetzt. Die erhaltene Beschichtungslösung wird auf dem Substrat gleichmäßig verteilt und der überschüssige Anteil bei 2000 U/min abgeschleudert.
Die mit der Beschichtungslösung bedeckte Glasplatte wird bei Raumtemperatur in einen Umluftofen gegeben und dieser innerhalb von 90 min auf 500 °C aufgeheizt. Nach einer Haltezeit von 5 min bei 500 °C wird die beschichtete Glasplatte im Ofen abgekühlt. Die so erhaltene Schicht ist vollständig transparent bei einer Schichtdicke von ca. 75 nm und weist visuell keinerlei Fehlstellen auf. Die Schicht hat eine Brechzahl von 2,03 und ist stabil gegenüber Bewitterungstests (85 °C/85 % rel. Feuchte für 1000 Stunden), Temperatur-Wechseltest (55 °C/+ 125 °C nach DIN 40046 Blatt 4)L, CASS-Test (96 h) nach DIN 50021 - CASS und QUV-B-Test (500 h, in Anlehnung an DIN 53384-A). Die Abriebfestigkeit (nach DIN 52347) der abgeschiedenen Schicht ist identisch mit der Abriebfestigkeit von Schichten, die durch Hydrolyse von Alkoxiden hergestellt werden.

### Beispiel 2

Mit dem in Beispiel 1 beschriebenen Sol werden Schichten durch Tauchbeschichtung hergestellt. Um zu technologisch relevanten Ziehgeschwindigkeiten von ca. 10 cm/min zu gelangen wird das Sol verdünnt, bevor es durch ein Filter mit einem Porendurchmesser von 0,2 µm druckfiltriert wird. Hierzu werden zu ein Teil Sol zwei Teile 1 n HCl zugegeben und zur Verbesserung der Verlaufseigenschaften 4 Tropfen eines handelsüblichen Spülmittels, zum Beispiel Sunlicht Progress, hinzugefügt. Die Vorbehandlung der Flachglasplatten erfolgt wie in Beispiel 1.

Die Beschichtung der Flachglasplatten erfolgt durch Tauchen mit einer Ausziehgeschwindigkeit von 90 mm/min. Die so erhaltenen Beschichtungen werden wie oben beschrieben getempert. Die getemperten Schichten sind transparent und zeigen die gleiche Stabilität wie die in Beispiel 1 beschriebenen Schichten. Punktförmige Fehlstellen können durch Zugabe von 1,6 Massen-% Acetylaceton verringert werden.

### Beispiel 3

Die Reinigung der Flachglasplatten erfolgt wie in Beispiel 1 beschrieben. Als Sol wird ein neutrales SiO₂-Sol mit 10 Massen-% Feststoffgehalt (Hersteller: Merck KGaA) eingesetzt. Das Sol wird mit 4 Teilen demineralisiertem Wasser verdünnt, durch einen Filter mit 1 µm Porendurchmesser druckfiltriert und der pH-Wert mit konzentrierter Salzsäure auf 1,5 eingestellt. Zur Verbesserung der Verlaufseigenschaften werden 4 Tropfen eines handelsüblichen Spülmittels auf 100 ml verdünntes Sol zugegeben. Die so erhaltene Beschichtungslösung wurde wie in Beispiel 1 durch Spin-Off-Auftrag auf die vorbehandelten Glasplatten aufgegeben. Alle übrigen Bedingungen entsprechen denen von Beispiel 1. Es werden Beschichtungen gleicher Qualität erhalten.

### Beispiel 4

Die in den Beispielen 1 und 3 beschriebenen Sole werden vor einer Druckfiltration in unverdünnter Form miteinander gemischt. Eingestellt werden die molaren Verhältnisse SiO₂ : ZrO₂ von 0,1; 1 und 10. Die Sole sind in diesen Verhältnissen ohne weiteres mischbar und können direkt für Schleuderbeschichtungen unter den Bedingungen, wie bereits in Beispiel 1 beschrieben, eingesetzt werden. Alle übrigen Bedingungen entsprechen denen von Beispiel 1. Auf diese Weise werden fehlerfreie, transparente Beschichtungen mit Schichtdicken im Bereich von 100 nm erhalten, deren Brechzahl von 1,95 (SiO₂/ZrO₂ - Verhältnis = 10) bis 1,47 (SiO₂/ZrO₂ - Verhältnis = 0,1) variierbar ist.

### Beispiel 5

Die Vorbehandlung der Flachglasplatten erfolgt gemäß Beispiel 1. Als Sol wird ein saures TiO₂-Sol mit ca. 12 Massen-% Feststoffgehalt eingesetzt. Das Sol wird mit drei Teilen demineralisiertem Wasser verdünnt. Der Auftrag auf die Glasplatten erfolgt mit Spin-Off-Verfahren. Die mit der Beschichtungslösung versehenen Glasplatten werden bei 1500 U/min für 60 s geschleudert. Anschließend werden sie über Nacht bei 70 °C getrocknet und unter den in Beispiel 1 beschriebenen Bedingungen getempert. Es werden transparente Beschichtungen erhalten.

### Beispiel 6

Die Reinigung der Glasplatten erfolgt wie in Beispiel 1 beschrieben. Als Sol wird ein neutrales SiO₂-Sol mit 10 Massen-% Feststoffgehalt (Hersteller: Merck KGaA) eingesetzt. Das Sol wird mit 3 Teilen demineralisiertem Wasser verdünnt und anschließend mit 2,8 g konzentrierter HCl auf 1000 g verdünntes Sol angesäuert. Für eine Beschichtungslösung zur Herstellung von porösen Schichten werden 0,7 g einer Tensidmischung auf 1000 g Lösung hinzu getropft. Die Tensidmischung besteht aus 20 % Natriumdodecylbenzolsulfonat, 10 % Natriumkokosfettalkoholethersulfat 3 EO und 5 % Dodecylpolyglykolether 7 EO, gelöst in Wasser.

Die Beschichtung von Flachglasplatten erfolgt durch Tauchen mit einer Ausziehgeschwindigkeit von 90 mm/min. Die so erhaltenen Beschichtungen werden auf 550 °C aufgeheizt und nach einer Haltezeit von 15 min im Ofen ungeregelt abgekühlt. Die so erhaltene Schicht weist eine Brechzahl von 1,30 auf und ist stabil gegenüber den in Beispiel 1 aufgeführten Klimatests.

## Patentansprüche

1. Verfahren zur Abscheidung optischer Schichten von Metalloxiden, ausgewählt aus der Gruppe bestehend aus Siliziumdioxid, Aluminiumoxid, Titandioxid, Zirkonoxid, Hafniumoxid, Nioboxid, Tantaloxid und Oxiden von Actiniden oder Lanthaniden, auf Gläsern, Keramiken oder Metallen, indem
- das zu beschichtende Substrat einer reinigenden Vorbehandlung unterzogen wird,
- ein wässriges Sol oder Solgemisch ohne Zusatz von organischen Lösungsmitteln auf das zu beschichtende Substrat aufgebracht wird und
- das beschichtete Substrat bei Temperaturen von 100-550°C getempert wird.

2. Verfahren nach Anspruch 1, **dadurch gekennzeichnet, dass** vor dem Tempern eine Vortrocknung der applizierten Schicht bei 20 bis 70 °C über einen Zeitraum von 0,5 bis 10 Stunden erfolgt.

3. Verfahren nach Anspruch 1 oder 2, **dadurch gekennzeichnet, dass** dem wässrigen Sol oder Solgemisch weniger als 2 Gew. -%, bezogen auf den Feststoffgehalt der Beschichtungslösung, Detergentien und Verlaufsmittel zugesetzt werden.

4. Verfahren nach Anspruch 3, **dadurch gekennzeichnet, dass** als Detergens ein Tensidgemisch zugesetzt wird, das aus 15-30 Gew. -% anionischen Tensiden, 5-15 Gew. -% nichtionischen Tensiden und weniger als 5 Gew. -% amphoteren Tensiden besteht.

5. Verfahren nach einem oder mehreren der Ansprüche 1 bis 4, **dadurch gekennzeichnet, dass** poröse Metalloxidschichten abgeschieden werden.

6. Verfahren nach Anspruch 5, **dadurch gekennzeichnet, dass** Metalloxidschichten aus SiO₂ abgeschieden werden.

7. Verfahren nach den Ansprüchen 5 und 6, **dadurch gekennzeichnet, dass** Metallschichten mit einer Brechzahl von 1,30 abgeschieden werden.

8. Verfahren nach einem oder mehreren der Ansprüche 1 bis 7, **dadurch gekennzeichnet, dass** Sole mit einer Partikelgröße von 1 bis 50 nm abgeschieden werden.

## Claims

1. Process for depositing optical layers of metal oxides, selected from the group consisting of silicon dioxide, aluminium oxide, titanium dioxide, zirconium oxide, hafnium oxide, niobium oxide, tantalum oxide and oxides of actinides or lanthanides, on glass, ceramics or metals, by
- subjecting the substrate which is to be coated to a purifying pretreatment,
- applying an aqueous sol or sol mixture to the substrate which is to be coated without the addition of organic solvents, and
- heat-treating the coated substrate, at temperatures of from 100-550°C.

2. Process according to Claim 1, **characterized in that** before heat treatment the applied layer is predried at from 20 to 70°C over a period of from 0.5 to 10 hours.

3. Process according to Claim 1 or 2, **characterized in that** less than 2% by weight, based on the solids content of the coating solution, of detergents and levelling agents are added to the aqueous sol or sol mixture.

4. Process according to Claim 3, **characterized in that** a surfactant mixture which consists of 15-30% by weight anionic surfactants, 5-15% by weight nonionic surfactants and less than 5% by weight amphoteric surfactants is added as detergent.

5. Process according to one or more of Claims 1 to 4, **characterized in that** porous metal oxide layers are deposited.

6. Process according to Claim 5, **characterized in that** metal oxide layers of SiO₂ are deposited.

7. Process according to Claims 5 and 6, **characterized in that** metal layers having a refractive index of 1.30 are deposited.

8. Process according to one or more of Claims 1 to 7, **characterized in that** sols having a particle size of from 1 to 50 nm are deposited.

## Revendications

1. Procédé de déposition de couches optiques d'oxydes métalliques choisis dans le groupe comprenant le dioxyde de silicium, l'oxyde d'aluminium, le dioxyde de titane, l'oxyde de zirconium, l'oxyde d'hafnium, l'oxyde de niobium, l'oxyde de tantale et les oxydes d'actinides ou de lanthanides, sur des verres, des céramiques ou des métaux, dans lequel
- on soumet le substrat à recouvrir à un prétraitement de nettoyage,
- on applique un sol ou un mélange de sols aqueux sans addition de solvants organiques sur le substrat à revêtir, et
- on trempe le substrat recouvert à des températures de 100 - 550°C.

2. Procédé selon la revendication 1, **caractérisé en ce qu'**avant la trempe la couche appliquée est préalablement séchée à 20 - 70°C pendant une période de 0,5 à 10 heures.

3. Procédé selon la revendication 1 ou 2, **caractérisé en ce qu'**au sol ou au mélange de sols aqueux on ajoute moins de 2% en poids, par rapport à la teneur en substance solide de la solution de déposition, de détergents et de produits d'écoulement.

4. Procédé selon la revendication 3, **caractérisé en ce que** comme détergent on ajoute un mélange d'agents tensioactifs comprenant 15-30% en poids d'agents tensioactifs anioniques, 5-15% en poids d'agents tensioactifs non ioniques et moins de 5% en poids d'agents tensioactifs amphotères.

5. Procédé selon l'une ou plusieurs des revendications 1 à 4, **caractérisé en ce que** l'on dépose des couches d'oxydes métalliques poreuses.

6. Procédé selon la revendication 5, **caractérisé en ce que** l'on dépose des couches d'oxydes métalliques de SiO₂.

7. Procédé selon les revendications 5 et 6, **caractérisé en ce que** l'on dépose des couches métalliques présentant un indice de réfraction de 1,30.

8. Procédé selon l'une ou plusieurs des revendications 1 à 7, **caractérisé en ce que** l'on dépose des sols présentant une taille de particules de 1 à 50 nm.
